# EUROPEAN PATENT APPLICATION

(11) **EP 4 626 059 A1**
(43) Date of publication of application: **01.10.2025**
(21) Application number: 23905819.1
(22) Date of filing: 15.12.2023
(51) Int. Cl.: H04W 24/02

(54) **INFORMATION INDICATION METHOD AND COMMUNICATION APPARATUS**

(30) Priority: 22.12.2022 CN 202211659150
(71) Applicant: Huawei Technologies Co., Ltd., Shenzhen, Guangdong 518129 (CN)
(72) Inventor: RUAN, Wei, Shenzhen, Guangdong 518129 (CN); MA, Yunsi, Shenzhen, Guangdong 518129 (CN)
(74) Representative: Gill Jennings & Every LLP
(86) International application number: PCT/CN2023/139011
(87) International publication number: WO 2024/131655

(57) **Abstract**

This application relates to the communication field, and in particular, to an information indication method and a communication apparatus. This solution may be applied to a WLAN system that supports an 802.11 series protocol, for example, a next-generation Wi-Fi protocol of IEEE 802.11ax (for example, 802.11be, Wi-Fi 7, or EHT) or a next-generation protocol of 802.11be (for example, Wi-Fi 8); and may be further applied to a UWB-based wireless personal area network system. In the method, a first frame generated by a first device includes first indication information, and the first indication information may indicate whether a channel between a transmit end and a receive end meets a smoothness requirement, so that the receive end can perform channel smoothing when a first channel meets the smoothness requirement, to improve demodulation performance of the receive end.

## Description

This application claims priority to Chinese Patent Application No. 202211659150.4, filed with the China National Intellectual Property Administration on December 22, 2022 and entitled "INFORMATION INDICATION METHOD AND COMMUNICATION APPARATUS", which is incorporated herein by reference in its entirety.

### TECHNICAL FIELD

This application relates to the field of communication technologies, and more specifically, to an information indication method and a communication apparatus.

### BACKGROUND

A signal may be sent between wireless fidelity (wireless fidelity, Wi-Fi) system devices through beamforming (Beamforming). Channels with beamforming are discontinuous. Consequently, beamforming of a beamformer (Beamformer) is incompatible with channel smoothing of a beamformee (Beamformee). In a low signal-to-noise ratio (or medium signal-to-noise ratio) area, packet error rate (packet error rate, PER) performance can be improved by 1 dB to 2 dB through channel smoothing. However, when the beamformer uses a smooth beamforming technology, the beamformee may use a channel smoothing technology to improve receiving performance, that is, that the beamformer uses the smooth beamforming technology can resolve a problem of incompatibility between beamforming and channel smoothing.

According to an existing Wi-Fi protocol, the beamformer indicates, to the beamformee, whether a sent data packet is beamformed, or whether the beamformee needs to perform channel smoothing. However, the beamformer does not indicate whether the smooth beamforming technology is used, which may lead to a demodulation performance loss of the beamformee.

### SUMMARY

This application provides an information indication method and a communication apparatus, to determine whether a first channel meets a smoothness requirement, and therefore determine whether to perform channel smoothing. In this way, demodulation performance is improved.

According to a first aspect, a communication method is provided. The method may be performed by a first device, or may be performed by a component (for example, a chip, a circuit, or a module) configured in the first device. This is not limited in this application.

The method includes: generating a first frame, where the first frame includes first indication information, the first indication information indicates whether a first channel meets a smoothness requirement, and the first channel includes a plurality of subchannels for communication between the first device and a second device; and sending the first frame to the second device.

Based on the foregoing solution, the first frame generated by the first device includes the first indication information, and the first indication information may indicate whether a channel (the first channel) between a transmit end and a receive end meets the smoothness requirement, so that the receive end can perform channel smoothing when the first channel meets the smoothness requirement, to improve demodulation performance of the receive end.

With reference to the first aspect, in some implementations of the first aspect, the first indication information further indicates whether a subchannel in a first subchannel set meets the smoothness requirement, and the first subchannel set includes a part or all of subchannels in the plurality of subchannels.

With reference to the first aspect, in some implementations of the first aspect, whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

With reference to the first aspect, in some implementations of the first aspect, a second frame is received from the second device, where the second frame includes second indication information, and the second indication information indicates whether the first matrix or the second matrix meets the smoothness requirement.

With reference to the first aspect, in some implementations of the first aspect, a second frame is received from the second device, where the second frame includes third indication information, the third indication information indicates whether a subchannel in a second subchannel set meets the smoothness requirement, the second subchannel set includes a part or all of subchannels in the plurality of subchannels, and the first subchannel set is different from the second subchannel set.

With reference to the first aspect, in some implementations of the first aspect, the second frame is an extremely high throughput compressed beamforming frame or a channel quality indicator (channel quality indicator, CQI) frame.

For example, the second indication information may be carried in a field in the extremely high throughput compressed beamforming frame or the channel quality indicator CQI frame.

In addition, this solution in this application is compatible with an existing protocol, and has better scalability.

With reference to the first aspect, in some implementations of the first aspect, the first frame is a physical layer protocol data unit PPDU frame or a null data packet announcement (null data packet announcement, NDPA) frame.

With reference to the first aspect, in some implementations of the first aspect, the first frame further includes a first field, and the first field indicates whether the first frame carries the first indication information.

With reference to the first aspect, in some implementations of the first aspect, the second frame further includes a second field, and the second field indicates whether the second frame carries the second indication information.

According to a second aspect, a communication method is provided. The method may be performed by a second device, or may be performed by a component (for example, a chip, a circuit, or a module) configured in the second device. This is not limited in this application.

The method includes: receiving a first frame from a first device, where the first frame includes first indication information, the first indication information indicates whether a first channel meets a smoothness requirement, and the first channel includes a plurality of subchannels for communication between the first device and the second device; and generating a second frame based on the first frame.

Based on the foregoing solution, the first frame generated by the first device includes the first indication information, and the first indication information may indicate whether a channel (the first channel) between a transmit end and a receive end meets the smoothness requirement or a correlation requirement, so that the receive end can perform channel smoothing when the first channel meets the smoothness requirement or the correlation requirement, to improve demodulation performance of the receive end.

With reference to the second aspect, in some implementations of the second aspect, the first indication information further indicates whether a subchannel in a first subchannel set meets the smoothness requirement, and the first subchannel set includes a part or all of subchannels in the plurality of subchannels.

With reference to the second aspect, in some implementations of the second aspect, whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

With reference to the second aspect, in some implementations of the second aspect, the second frame is sent to the first device, where the second frame includes second indication information, and the second indication information indicates whether the first matrix or the second matrix meets the smoothness requirement.

With reference to the second aspect, in some implementations of the second aspect, the second frame is sent to the first device, where the second frame includes third indication information, the third indication information indicates whether a subchannel in a second subchannel set meets the smoothness requirement, the second subchannel set includes a part or all of subchannels in the plurality of subchannels, and the first subchannel set is different from the second subchannel set.

With reference to the second aspect, in some implementations of the second aspect, the second frame is an extremely high throughput compressed beamforming frame or a channel quality indicator CQI frame.

For example, the second indication information may be carried in a field in the extremely high throughput compressed beamforming frame or the channel quality indicator CQI frame.

In this embodiment of this application, an existing indication field may be reused, and whether the first channel meets the smoothness requirement is indicated without introducing a new indication field. This helps save resources.

In addition, this solution in this application is compatible with an existing protocol, and has better scalability.

With reference to the second aspect, in some implementations of the second aspect, the first frame is a physical layer protocol data unit PPDU frame or a null data packet announcement NDPA frame.

In this embodiment of this application, an existing indication field may be reused, and whether the first channel meets the smoothness requirement is indicated without introducing a new indication field. This helps save resources.

With reference to the second aspect, in some implementations of the second aspect, the first frame further includes a first field, and the first field indicates whether the first frame carries the first indication information.

With reference to the second aspect, in some implementations of the second aspect, the second frame further includes a second field, and the second field indicates whether the second frame carries the second indication information.

According to a third aspect, a communication apparatus is provided. The apparatus is configured to perform the method according to the first aspect. Specifically, the communication apparatus may include a unit and/or a module configured to perform the method according to any one of the first aspect or the implementations of the first aspect, for example, a processing unit and/or a communication unit.

In an implementation, the communication apparatus is a transmit end device (a first device). When the communication apparatus is the transmit end device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a transmit end device. When the communication apparatus is the chip, the chip system, or the circuit in the transmit end device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fourth aspect, a communication apparatus is provided. The apparatus is configured to perform the method according to the second aspect. Specifically, the communication apparatus may include a unit and/or a module configured to perform the method according to any one of the second aspect or the implementations of the second aspect, for example, a processing unit and/or a communication unit.

In an implementation, the communication apparatus is a receive end device (a second device). When the communication apparatus is the receive end device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a receive end device. When the communication apparatus is the chip, the chip system, or the circuit in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus/device is provided. The apparatus includes a processor, and optionally, further includes a memory. The processor is configured to control a transceiver to receive and send signals, the memory is configured to store a computer program, and the processor is configured to invoke the computer program from the memory and run the computer program, so that the sending device performs the method according to any one of the first aspect or the possible implementations of the first aspect.

Optionally, there are one or more processors, and there are one or more memories.

Optionally, the memory and the processor may be integrated together, or the memory and the processor may be separately disposed.

Optionally, the sending device further includes the transceiver, and the transceiver may be specifically a transmitter machine (transmitter) and a receiver machine (receiver).

According to a sixth aspect, a communication apparatus is provided. The apparatus includes a processor, and optionally, further includes a memory. The processor is configured to control a transceiver to receive and send signals, the memory is configured to store a computer program, and the processor is configured to invoke the computer program from the memory and run the computer program, so that the receiving device performs the method according to any one of the second aspect or the possible implementations of the second aspect.

Optionally, there are one or more processors, and there are one or more memories.

Optionally, the memory and the processor may be integrated together, or the memory and the processor may be separately disposed.

Optionally, the receiving device further includes the transceiver, and the transceiver may be specifically a transmitter machine (transmitter) and a receiver machine (receiver).

According to a seventh aspect, a communication system is provided. The system includes: a sending device, configured to perform the method according to any one of the first aspect or the possible implementations of the first aspect; and a receiving device, configured to perform the method according to any one of the second aspect or the possible implementations of the second aspect.

According to an eighth aspect, a computer-readable storage medium is provided. The computer-readable storage medium stores a computer program or code. When the computer program or the code is run on a computer, the computer is enabled to perform the method according to any one of the first aspect or the possible implementations of the first aspect, or the method according to any one of the second aspect or the possible implementations of the second aspect.

According to a ninth aspect, a chip is provided. The chip includes at least one processor. The at least one processor is coupled to a memory, the memory is configured to store a computer program, and the processor is configured to invoke the computer program from the memory and run the computer program, so that a sending device in which a chip system is installed performs the method according to any one of the first aspect or the possible implementations of the first aspect, and a receiving device in which a chip system is installed performs the method according to any one of the second aspect or the possible implementations of the second aspect.

The chip may include an input circuit or interface configured to send information or data, and an output circuit or interface configured to receive information or data.

According to a tenth aspect, a computer program product is provided. The computer program product includes computer program code. When the computer program code is run by a sending device, the method according to any one of the first aspect or the possible implementations of the first aspect is performed; and when the computer program code is run by a receiving device, the method according to any one of the second aspect or the possible implementations of the second aspect is performed.

### BRIEF DESCRIPTION OF DRAWINGS

FIG. 1 is a diagram of a communication system applicable to an embodiment of this application;
FIG. 2 is a schematic flowchart of an information indication method 200 according to an embodiment of this application;
FIG. 3 is a diagram of a format of a user information field in an NDPA frame;
FIG. 4 is a diagram of a format of a user information field in another NDPA frame;
FIG. 5 is a diagram of a format of a user information field in another NDPA frame;
FIG. 6 is a diagram of a format of an EHT MIMO control field;
FIG. 7 is a diagram of a communication apparatus according to an embodiment of this application;
FIG. 8 is another diagram of a communication apparatus according to an embodiment of this application; and
FIG. 9 is another diagram of a communication apparatus according to an embodiment of this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario supporting, for example, an IEEE 802.11-related standard (for example, the 802.11a/b/g standard, the 802.11n standard, the 802.11ac standard, or the 802.11ax standard), a next-generation Wi-Fi protocol of IEEE 802.11ax (for example, 802.11be, Wi-Fi 7, extremely high throughput (extremely high throughput, EHT), 802.11ad, 802.11ay, or 802.11bf), or a next-generation standard of 802.11be (for example, Wi-Fi 8); may be further applied to an ultra-wideband (ultra-wideband, UWB)-based wireless personal area network system supporting, for example, an 802.15 series standard; and may be further applied to a sensing (sensing) system supporting, for example, an 802.11bf series standard. The 802.11n standard is referred to as high throughput (high throughput, HT), the 802.11ac standard is referred to as very high throughput (very high throughput, VHT), the 802.11ax standard is referred to as high efficiency (high efficiency, HE), and the 802.11be standard is referred to as extremely high throughput (extremely high throughput, EHT).

Although embodiments of this application are mainly described by using an example in which a WLAN, especially a network to which an IEEE 802.11 system standard is applied, is deployed, a person skilled in the art easily understands that aspects involved in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or another network that is known or to be developed in the future. Therefore, regardless of a used coverage area and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, an internet of things (internet of things, IoT), and an internet of vehicles (vehicle to x, V2X).

The foregoing communication systems applicable to this application are merely examples for description, and the communication systems applicable to this application are not limited thereto. This is uniformly described herein, and details are not described below again.

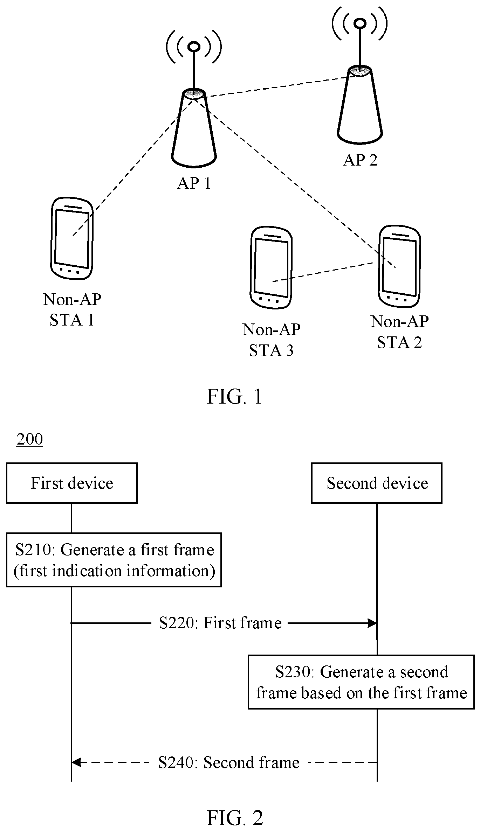

FIG. 1 is a diagram of an application scenario to which an embodiment of this application is applicable. As shown in FIG. 1, a communication method provided in this application is applicable to data communication between stations (stations, STAs). The station may be an access point (access point, AP) station, or may be a non-access point station (non-access point station, non-AP STA). The access point station and the non-access point station are respectively referred to as an AP and a non-AP station for short. Specifically, the solutions in this application are applicable to data communication between an AP and one or more non-AP stations (for example, data communication between an AP 1, a non-AP STA 1, and a non-AP STA 2), are also applicable to data communication between APs (for example, data communication between the AP 1 and an AP 2), and are applicable to data communication between non-AP STAs (for example, data communication between the non-AP STA 2 and a non-AP STA 3).

The access point may be an access point for a terminal (for example, a mobile phone) to access a wired (or wireless) network, and is mainly deployed in a home, inside a building, and inside a campus, with a typical coverage radius of tens of meters to hundreds of meters. Certainly, the access point may alternatively be deployed outdoors. The access point is equivalent to a bridge that connects a wired network and a wireless network. A main function of the access point is to connect wireless network clients together, and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device that supports a Wi-Fi standard. For example, the access point may alternatively support one or more standards of the institute of electrical and electronics engineers (Institute of Electrical and Electronics Engineers, IEEE) 802.11 family, such as 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an internet of things device, a wearable device, a terminal device in a 5G network, a terminal device in a future 6G network, a terminal device in a PLMN, or the like. This is not limited in embodiments of this application. The non-AP station may be a device that supports a WLAN standard. For example, the non-AP station may support one or more standards of the IEEE 802.11 family, such as 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, an in-vehicle communication device, a computer, an internet of things (internet of things, IoT) node, a sensor, a smart home (for example, a smart camera, a smart remote control, a smart water meter), a sensor in a smart city, or the like.

The AP or the non-AP station may include a transmitter, a receiver, a memory, a processor, and the like. The transmitter and the receiver are respectively configured to send and receive packet structures. The memory is configured to: store signaling information, store a preset value agreed in advance, and so on. The processor is configured to: parse the signaling information, process related data, and so on.

A wireless communication system provided in embodiments of this application may be a WLAN or a cellular network. The method may be implemented by a communication device in the wireless communication system or a chip or a processor in the communication device. The communication device may be a wireless communication device that supports parallel transmission on a plurality of links. For example, the communication device is referred to as a multi-link device (multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may work on one link. The affiliated station may be an AP or a non-AP STA. A multi-link device whose affiliated station is an AP may be referred to as a multi-link AP, a multi-link AP device, or an AP multi-link device (AP multi-link device). A multi-link device whose affiliated station is a non-AP STA may be referred to as a multi-link STA, a multi-link STA device, or a STA multi-link device (STA multi-link device).

In the wireless communication system provided in embodiments of this application, a signal may be sent between communication devices through beamforming (beamforming). Channels with beamforming are discontinuous. Consequently, beamforming of a beamformer (Beamformer) (for example, the AP station or the non-AP station) is incompatible with channel smoothing of a beamformee (Beamformee). In a low signal-to-noise ratio (or medium signal-to-noise ratio) area, packet error rate (packet error rate, PER) performance can be improved by 1 dB to 2 dB through channel smoothing. However, when the beamformer uses a smooth beamforming technology, the beamformee may use a channel smoothing technology to improve receiving performance, that is, that the beamformer uses the smooth beamforming technology can resolve a problem of incompatibility between beamforming and channel smoothing.

According to an existing Wi-Fi protocol, the beamformer indicates, to the beamformee, whether a sent data packet is beamformed, or whether the beamformee needs to perform channel smoothing. The 802.11be protocol is used as an example.
(1) A common information field (Common field) in an EHT sounding (sounding) null data packet (null data packet, NDP) frame includes a beamformed field (B13). If the beamformed field is set to 1, it indicates that a beamforming steering matrix (beamforming steering matrix) is applied to an EHT modulation field. If the beamforming steering matrix is not applied to the EHT modulation field, the beamformed field is set to 0. For example, the beamformer may send the EHT sounding NDP frame to the beamformee in a channel sounding phase.
(2) If a beamformed field in an extremely high throughput-signaling EHT-SIG field in the EHT sounding NDP frame is set to 1, it indicates that the beamformee is not expected to perform channel smoothing when generating a compressed beamforming feedback report.
(3) EHT-SIG in an extremely high throughput multi-user physical layer protocol data unit (extremely high throughput multi-user physical layer protocol data unit, EHT MU PPDU) format includes a beamformed field (B20). If the EHT MU PPDU is sent to a single user, and a user information STA-ID field in the EHT MU PPDU is not equal to 2046, the beamformed field is set to 1, to indicate transmit beamforming. Alternatively, if the beamforming steering matrix (beamforming steering matrix) is used for a waveform in non-MU-MIMO allocation, the beamformed field is set to 1. If the beamforming steering matrix is not used for the waveform in the non-MU-MIMO allocation, the beamformed field is set to 0.

However, if the beamformer uses the smooth beamforming technology, in the existing Wi-Fi protocol, whether the beamformer uses the smooth beamforming technology is not indicated, which may lead to a demodulation performance loss of the beamformee.

The following describes in detail the technical solutions provided in this application with reference to the accompanying drawings. Embodiments of this application may be applied to a plurality of different scenarios, including the scenario shown in FIG. 1, but are not limited to the scenario.

FIG. 2 is a schematic flowchart of an information indication method 200 according to an embodiment of this application.

S210: A first device generates a first frame, where the first frame includes first indication information.

The first indication information indicates whether a first channel meets a smoothness requirement or a correlation requirement, and the first channel includes a plurality of subchannels (or subcarriers) for communication between the first device and a second device. In other words, the first indication information indicates whether the first channel needs to meet the smoothness requirement or the correlation requirement. Optionally, in this embodiment of this application, smoothness may also be understood as continuity.

For example, if the first device communicates with the second device by using a smooth beamforming technology, the first channel meets the smoothness requirement or the correlation requirement. In other words, the smooth beamforming technology may enable the first channel to meet the smoothness requirement or the correlation requirement.

Optionally, the first indication information may further indicate whether a subchannel in a first subchannel set meets the smoothness requirement or the correlation requirement, and the first subchannel set includes a part of subchannels in the plurality of subchannels.

It should be understood that, in this application, whether a subchannel (for example, all or a part of subchannels in the plurality of subchannels) meets the smoothness requirement or the correlation requirement may be understood as whether a first matrix or a second matrix corresponding to the subchannel meets the smoothness requirement. The first matrix is a beamforming feedback matrix (beamforming feedback matrix), and the second matrix is a beamforming steering matrix (beamforming steering matrix), or the second matrix is obtained by multiplying a channel matrix with a beamforming steering matrix. The second matrix may also be referred to as a beamforming steering matrix on which channel weighting is performed.

For a method for measuring smoothness of a matrix (including the first matrix and the second matrix), refer to existing related descriptions. For example, whether the matrix meets the smoothness requirement may be determined by calculating a correlation value of adjacent columns in the matrix. If the correlation value of the adjacent columns in the matrix exceeds a specific threshold, it is considered that the adjacent columns exhibit correlation or smoothness. If all columns in the matrix exhibit correlation, it may be considered that the matrix has smoothness.

Alternatively, in this application, when channel frequencies corresponding to different subcarriers exhibit correlation, a channel is described as exhibiting smoothness or having smoothness, in other words, frequency response of the channel does not have a discontinuity or an abrupt change.

In other words, the first indication information may indicate whether a beamforming feedback matrix corresponding to the first channel or the first channel set needs to meet the smoothness requirement, to indicate whether the first channel meets the smoothness requirement or the correlation requirement.

Alternatively, the first indication information may indicate whether a second matrix corresponding to the first channel or the first channel set needs to meet the smoothness requirement, to indicate whether the first channel meets the smoothness requirement or the correlation requirement.

In an implementation, it may be set that a physical layer protocol data unit PPDU frame sent by the first device carries the first indication information, that is, the first frame is the PPDU frame.

In an example, it may be set that a field #1 in the PPDU carries the first indication information. Specifically, if the field #1 in the PPDU is set to 1, it indicates that the first channel needs to meet the smoothness requirement or the correlation requirement; and if the field #1 is set to 0, it indicates that the first channel does not need to meet the smoothness requirement or the correlation requirement.

The 802.11be protocol is used as an example. The field #1 in the PPDU may be a beamformed field (B13) included in a common information field in an EHT sounding NDP frame. The beamformed field may be set to 0, to indicate that a beam steering matrix is not applied to an EHT modulation field, or a smooth beam steering matrix is applied to an EHT modulation field, so as to indicate that the first channel meets the smoothness requirement or the correlation requirement. For the EHT modulation field, refer to existing related descriptions.

Alternatively, the field #1 in the PPDU may be a beamformed field (B20) included in EHT-SIG in an EHT MU PPDU. If the EHT MU PPDU is sent to a single user, and a user information STA-ID field in the EHT MU PPDU is not equal to 2046, the beamformed field may be set to 0, to indicate that a beam steering matrix is not applied to an EHT modulation field, or a smooth beam steering matrix is applied to an EHT modulation field, so as to indicate that the first channel meets the smoothness requirement or the correlation requirement.

In another example, a field may be further extended in a signaling SIG field. For example, a smooth beamformed (Smooth Beamformed) field may be extended to carry the first indication information, and the smooth beamformed field may occupy one bit.

The bit may be a bit in a reserved field in the SIG field, for example, B14 of HE-SIG-A2 or B15 of a user field (User field) of EHT-SIG in non-MU MIMO allocation. Alternatively, the bit may be a bit in a disregard (Disregard) field in the SIG field, for example, B14 of HE-SIG-A2 or B15 of a user field of EHT-SIG in non-MU MIMO allocation.

In another implementation, the first frame is a null data packet announcement (NDP Announcement, NDPA) frame.

For example, the NDPA frame includes a user information field, a first bitmap field of the user information field carries the first indication information, and the first bitmap field may be an extension field of the user information field.

Specifically, the first bitmap field may include N bytes, and a value of N is related to a first channel bandwidth and a second channel bandwidth. The first channel bandwidth is a channel bandwidth of the first channel, the second channel bandwidth is a resolution bandwidth represented by each bit in the first bitmap, and a channel width of a channel is a frequency difference between a start frequency and an end frequency of the channel. N is a positive integer.

For example, if a bit #1 in the first bitmap field is set to 1, it indicates that a subchannel or a resource unit (resource unit, RU) corresponding to the bit #1 needs to meet the smoothness requirement or the correlation requirement; and if the bit #1 in the first bitmap field is set to 0, it indicates that the subchannel or the RU corresponding to the bit #1 does not need to meet the smoothness requirement or the correlation requirement.

Optionally, the first frame may further include an indication field indicating whether the first indication information exists in the first frame.

For example, if the indication field is set to 1, it indicates that the first indication information exists in the first frame; and if the indication field is set to 0, it indicates that the first indication information does not exist in the first frame.

S220: The first device sends the first frame to the second device.

For example, the first device may communicate with a plurality of receive end devices, and the second device is any one of the plurality of receive end devices. The first device may send the first frame to the second device in a unicast or broadcast manner.

Based on the foregoing solution, the first frame generated by a transmit end (the first device) includes the first indication information, and the first indication information may indicate whether a channel (the first channel) between the transmit end and a receive end meets the smoothness requirement or the correlation requirement, so that the receive end can perform channel smoothing when the first channel meets the smoothness requirement or the correlation requirement, to improve demodulation performance of the receive end.

S230: The second device determines, based on the first indication information, whether the first channel meets the smoothness requirement.

Optionally, the method further includes S240: The second device sends a second frame to the first device, where the second frame includes second indication information.

Correspondingly, the first device receives the second frame from the second device.

The second indication information indicates whether the first matrix or the second matrix meets the smoothness requirement. For related descriptions of the first matrix and the second matrix, refer to the descriptions in S210.

In other words, when the second device receives the first indication information from the first device, the second device feeds back, to the first device, whether the first matrix or the second matrix corresponding to the first channel (or the first subchannel set) meets the smoothness requirement.

Specifically, the second frame is an extremely high throughput compressed beamforming (EHT compressed beamforming) frame or a channel quality indicator (channel quality indicator, CQI) frame.

For example, it may be set that a field #1 in the second frame carries the first indication information. Specifically, if the field #1 in the second frame is set to 1, it indicates that the first matrix or the second matrix corresponding to the first channel (or the first subchannel set) meets the smoothness requirement; and if the field #1 is set to 0, it indicates that the first matrix or the second matrix corresponding to the first channel (or the first subchannel set) does not meet the smoothness requirement.

Optionally, if the first matrix or the second matrix corresponding to the first channel (or the first subchannel set) does not meet the smoothness requirement, it may be further set that second frame carries third indication information, and the third indication information indicates that a first matrix or a second matrix corresponding to a subchannel in a second subchannel set meets the smoothness requirement or the correlation requirement. The second subchannel set includes a part or all of subchannels in the plurality of subchannels, and the first subchannel set is different from the second subchannel set. Optionally, the first subchannel set may alternatively be the same as the second subchannel set. In other words, the second device returns indication information indicating whether a first matrix or a second matrix corresponding to the second subchannel set meets the smoothness requirement, and the first subchannel set is the same as the second subchannel set.

The following describes frame formats of different frames that carry the first indication information, the second indication information, and the third indication information.

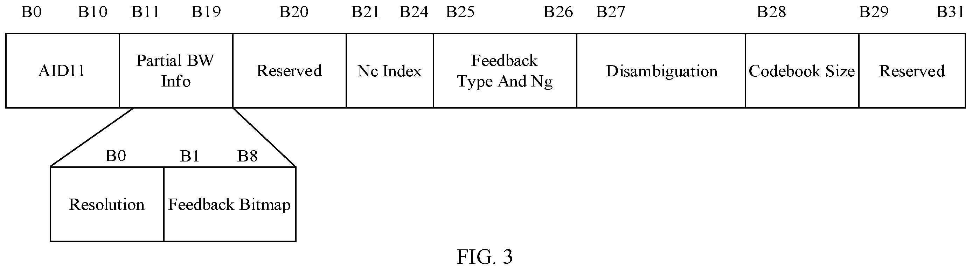

FIG. 3 is a diagram of a format of a user information (STA Info) field in an NDPA frame (an example of the first frame). As shown in FIG. 3, the NDPA frame includes an association identifier (association identifier, AID) 11 field (bits B0 to B10), a partial bandwidth information (Partial BW Info) field (bits B11 to B19), a reserved (Reserved) field (a bit B20 or bits B29 to B31), a number of columns (number of columns, Nc) index field (bits B21 to B24) of channel information that each AP needs to obtain, a feedback type and number of grouped subcarriers (Feedback Type And Ng) field (bits B25 and B26), a disambiguation field (a bit B27), and a codebook size (Codebook Size) field (a bit B28).

In an example, the NDPA frame shown in FIG. 3 is extended by N bytes to carry indication information #1 (an example of the first indication information), where the indication information #1 indicates whether a subchannel in a subchannel set #1 (an example of the first subchannel set) meets the smoothness requirement or the correlation requirement, and N is a positive integer.

Specifically, the indication information #1 indicates whether a beamforming steering matrix corresponding to the subchannel set #1 meets the smoothness requirement.

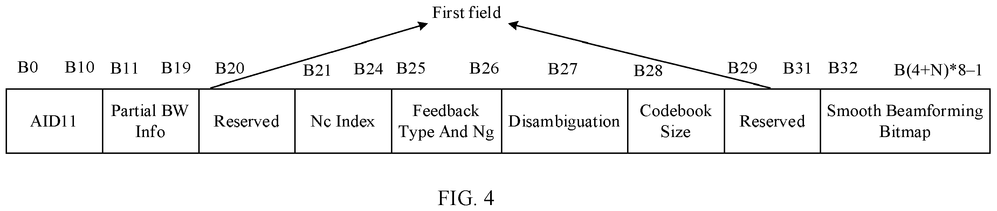

For example, a field #1 is extended in the NDPA frame to carry the indication information #1, the field #1 occupies a bit B32 to a bit B(4+N)*8-1 of the NDPA frame, and * represents multiplication. FIG. 4 is a diagram of a format of the NDPA frame that carries the field #1 according to this application. A smooth beamforming bitmap (Smooth Beamforming Bitmap) field represents the field #1.

The smooth beamforming bitmap field indicates whether each subchannel or RU with a resolution bandwidth from a lowest frequency to a highest frequency in the subchannel set #1 meets the smoothness requirement or the correlation requirement. The resolution bandwidth (resolution bandwidth) may be a channel bandwidth of one subchannel. If the smoothness requirement or the correlation requirement is met, a corresponding bit in the smooth beamforming bitmap field is set to 1. For example, if the channel bandwidth of the first channel is 160 MHz, and the resolution bandwidth is 20 MHz, the smooth beamforming bitmap field is set to 11111111, to indicate that the beamforming steering matrix corresponding to the subchannel set #1 meets the smoothness requirement.

In a possible implementation, a resolution of the smooth beamforming bitmap field is preset to be consistent with a resolution (Resolution) field (as shown in FIG. 3) in the partial BW info field.

The 802.11be protocol is used as an example. When the resolution field is set to 0, it indicates that a resolution is 20 MHz. When the resolution field is set to 1, it indicates that the resolution is 40 MHz. For example, when the channel bandwidth of the first channel is 320 MHz, the resolution may be set to 40 MHz.

When the resolution of the smooth beamforming bitmap field is 20 MHz, if the channel bandwidth of the first channel does not exceed 160 MHz, a value of N may be 1, that is, a quantity of bytes occupied by the smooth beamforming bitmap field is 1. If the channel bandwidth of the first channel exceeds 160 MHz, the smooth beamforming bitmap field is extended by one byte for every increased 160 MHz of channel bandwidth.

When the resolution of the smooth beamforming bitmap field is 40 MHz, if the channel bandwidth of the first channel is 320 MHz, the value of N may be 1.

In other words, in this implementation, the quantity of bytes occupied by the smooth beamforming bitmap field is the same as a quantity of bytes occupied by a feedback bitmap (Feedback bitmap) field (as shown in FIG. 3) in the partial BW info field.

In another possible implementation, a resolution of the smooth beamforming bitmap field may be preset to be inconsistent with a resolution (Resolution) field (as shown in FIG. 3) in the partial BW info field. A case of inconsistency may be as follows: A resolution indicated by the resolution (Resolution) field in the partial BW info field is set to M times the resolution of the smooth beamforming bitmap field, where M is a positive integer.

For example, when the channel bandwidth of the first channel is 320 MHz, the resolution field may be set to 1, that is, the resolution is 40 MHz. In this case, the resolution represented by the resolution field in the partial BW info field may be preset to twice the resolution of the smooth beamforming bitmap field.

In this implementation, M consecutive bits of the smooth beamforming bitmap field correspond to one bit of the feedback bitmap field. For example, when the channel bandwidth of the first channel is 320 MHz and the resolution field is 1, the feedback bitmap field may be represented as 11111111, and the smooth beamforming bitmap field may be represented as 11111111 11111111. A 1^{st} bit and a 2^{nd} bit of the smooth beamforming bitmap field correspond to a 1^{st} bit in the feedback bitmap field. For example, when two consecutive bits in the smooth beamforming bitmap field are both 1, it indicates that a subchannel corresponding to the 1^{st} bit in the feedback bitmap field meets the smoothness requirement or the correlation requirement.

In other words, in this implementation, a quantity of bytes occupied by the smooth beamforming bitmap field is M times a quantity of bytes occupied by the feedback bitmap field in the partial BW info field.

Optionally, as shown in FIG. 4, the NDPA frame may further carry a field #2 (an example of a first field), and the field #2 indicates whether the field #1 exists.

For example, a value of any one of the bit B20 or the bits B29 to B31 may be set to 1, to indicate that the NDPA frame includes the field #1.

For example, any bit (bit) in the reserved field may be changed to a smooth beamforming bitmap present (Smooth Beamforming Bitmap Present) field (the field #2).

When the smooth beamforming bitmap present field is set to 1, it indicates that the NDPA frame includes the smooth beamforming bitmap field (the field #1).

When a smooth feedback bitmap present sub-field is set to 0, it indicates that the NDPA frame does not include the smooth beamforming bitmap field.

It should be understood that names of the field #1 and the field #2 are merely examples, and do not constitute a limitation on this application. The field #1 and the field #2 may also have other names.

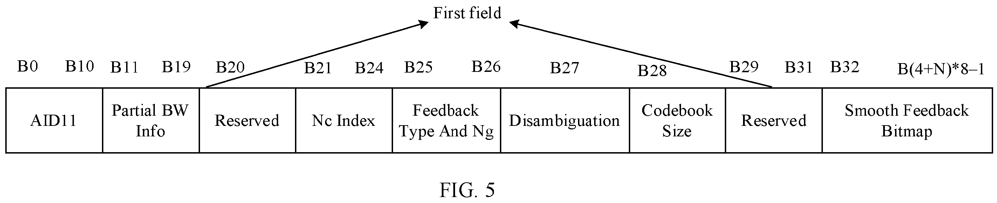

FIG. 5 is a diagram of a format of a STA info field in another NDPA frame. As shown in FIG. 5, the NDPA frame includes a field #3, and the field #3 is used to carry the first indication information.

In an example, the NDPA frame shown in FIG. 5 is extended by N bytes to carry indication information #2 (an example of the first indication information), where the indication information #2 indicates whether a subchannel in a subchannel set #1 (an example of the first subchannel set) meets the smoothness requirement or the correlation requirement, and N is a positive integer. Specifically, the indication information #2 indicates whether a beamforming feedback matrix corresponding to the subchannel set #1 meets the smoothness requirement or the correlation requirement.

For example, the field #3 is extended in the NDPA frame to carry the indication information #2, the field #3 occupies a bit B32 to a bit B(4+N)*8-1 of the NDPA frame, and * represents multiplication. As shown in FIG. 5, a smooth feedback bitmap (Smooth Feedback Bitmap) field represents the field #3.

The smooth feedback bitmap field indicates whether each subchannel or RU with a resolution bandwidth from a lowest frequency to a highest frequency in the subchannel set #1 meets the smoothness requirement or the correlation requirement. If the smoothness requirement or the correlation requirement is met, a corresponding bit in the smooth feedback bitmap field is set to 1.

For example, if the channel bandwidth of the first channel is 160 MHz, and the resolution bandwidth is 20 MHz, the smooth feedback bitmap field may be set to 11111111, to indicate that the beamforming feedback matrix corresponding to the subchannel set #1 meets the smoothness requirement.

In a possible implementation, a resolution of the smooth feedback bitmap field is preset to be consistent with a resolution field in a partial BW info field.

The 802.11be protocol is used as an example. When the resolution field is set to 0, it indicates that a resolution is 20 MHz. When the resolution field is set to 1, it indicates that the resolution is 40 MHz. For example, when the channel bandwidth of the first channel is 320 MHz, the resolution may be set to 40 MHz.

When the resolution of the smooth feedback bitmap field is 20 MHz, if the channel bandwidth of the first channel does not exceed 160 MHz, a value of N may be 1, that is, a quantity of bytes occupied by the smooth feedback bitmap field is 1. If the channel bandwidth of the first channel exceeds 160 MHz, the smooth feedback bitmap field is extended by one byte for every increased 160 MHz of channel bandwidth.

When the resolution of the smooth feedback bitmap field is 40 MHz, if the channel bandwidth of the first channel is 320 MHz, the value of N may be 1.

In other words, in this implementation, the quantity of bytes occupied by the smooth feedback bitmap field is the same as a quantity of bytes occupied by a feedback bitmap (Feedback bitmap) field (as shown in FIG. 3) in the partial BW info field.

In another possible implementation, a resolution of the smooth feedback bitmap field may be preset to be inconsistent with a resolution (Resolution) field (as shown in FIG. 3) in a partial BW info field. A case of inconsistency may be as follows: A resolution indicated by the resolution (Resolution) field in the partial BW info field is M times the resolution of the smooth feedback bitmap field, where M is a positive integer.

For example, when the channel bandwidth of the first channel is 320 MHz, the resolution field may be set to 1, that is, the resolution is 40 MHz. In this case, the resolution represented by the resolution field in the partial BW info field may be preset to twice the resolution of the smooth feedback bitmap field.

In this implementation, M consecutive bits of the smooth feedback bitmap field correspond to one bit of the feedback bitmap field. For example, when the channel bandwidth of the first channel is 320 MHz and the resolution field is 1, the feedback bitmap field may be represented as 11111111, and the smooth feedback bitmap field may be represented as 11111111 11111111. A 1^{st} bit and a 2^{nd} bit of the smooth feedback bitmap field correspond to a 1^{st} bit in the feedback bitmap field. For example, when two consecutive bits in the smooth feedback bitmap field are both 1, it indicates that a subchannel corresponding to the 1^{st} bit in the feedback bitmap field meets the smoothness requirement or the correlation requirement.

In other words, in this implementation, a quantity of bytes occupied by the smooth feedback bitmap field is M times a quantity of bytes occupied by the feedback bitmap field in the partial BW info field.

Optionally, as shown in FIG. 5, the NDPA frame may further carry a field #4 (an example of a first field), and the field #4 indicates whether the field #3 exists. A setting of the field #4 is similar to that of the field #2. Details are not described again.

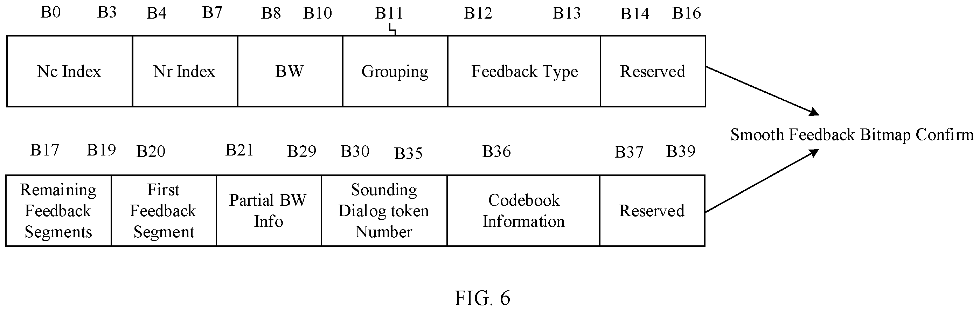

FIG. 6 is a diagram of a format of an EHT MIMO control field in an EHT compressed beamforming frame or a CQI frame. As shown in FIG. 6, the EHT MIMO control field includes an Nc index field (bits B0 to B3), an Nr index field (bits B4 to B7), a BW field (bits B8 to B10), a grouping field (a bit B11), a feedback type field (bits B12 and B13), a reserved (Reserved) field (bits B14 to B16, or bits B37 to B39), a remaining feedback segment field (a bit B20), a partial bandwidth (Partial BW Info) field (bits B21 to B29), a sounding dialog token number field (bits B30 to B35), and a codebook information field (a bit B36).

In an example, any bit in the reserved field in the EHT MIMO control field shown in FIG. 6 is set to carry indication information #3 (an example of the second indication information), where the indication information #3 indicates whether a beamforming feedback matrix or a matrix #1 (an example of the second matrix) corresponding to a subchannel set #1 meets the smoothness requirement. The matrix #1 is a beamforming steering matrix, or the matrix #1 is obtained by multiplying a channel matrix with a beamforming steering matrix.

Specifically, the any bit is a bit occupied by a smooth feedback bitmap confirm (Smooth Feedback Bitmap Confirm) field. When the smooth feedback bitmap confirm field is set to 1, it indicates that the beamforming feedback matrix or the matrix #1 corresponding to the subchannel set #1 meets the smoothness requirement. When the smooth feedback bitmap confirm field is set to 0, it indicates that the beamforming feedback matrix or the matrix #1 corresponding to the subchannel set #1 does not meet the smoothness requirement.

If a STA info field in an NDPA frame that is last received by a beamformee from a beamformer carries a field #1, and the matrix #1 corresponding to the subchannel set #1 meets the smoothness requirement, the smooth feedback bitmap confirm field is set to 1. If the STA info field in the NDPA frame carries the field #1, and the matrix #1 corresponding to the subchannel set #1 does not meet the smoothness requirement, the smooth feedback bitmap confirm field is set to 0.

If a STA info field in an NDPA frame that is last received by a beamformee from a beamformer carries a field #3, and the beamforming feedback matrix corresponding to the subchannel set #1 meets the smoothness requirement, the smooth feedback bitmap confirm field is set to 1. If the STA info field in the NDPA frame carries the field #3, and the beamforming feedback matrix corresponding to the subchannel set #1 does not meet the smoothness requirement, the smooth feedback bitmap confirm field is set to 0.

Further, another bit in the reserved field in the EHT MIMO control field may be further set to carry indication information #4, where the indication information #4 indicates whether the EHT MIMO control field includes a smooth feedback bitmap (Smooth Feedback Bitmap) field, and the smooth feedback bitmap field indicates whether a beamforming feedback matrix or a matrix #1 corresponding to a subchannel set #2 (an example of the second subchannel set) meets the smoothness requirement. The subchannel set #2 is different from the subchannel set #2.

Specifically, the another bit is a bit occupied by a smooth feedback bitmap present (Smooth Feedback Bitmap Present) field. When the smooth feedback bitmap present field is set to 1, it indicates that the EHT MIMO control field includes the smooth feedback bitmap field. When the smooth feedback bitmap present field is set to 0, it indicates that the EHT MIMO control field does not include the smooth feedback bitmap field.

For example, when the smooth feedback bitmap confirm field is set to 0, the smooth feedback bitmap present field may be set to 1. In other words, the beamforming feedback matrix or the matrix #1 corresponding to the subchannel set #1 does not meet the smoothness requirement, the beamforming feedback matrix or the matrix #1 corresponding to the subchannel set #2 meets the smoothness requirement, and the subchannel set #2 is different from the subchannel set #1.

For example, the field #3 is extended in the NDPA frame to carry indication information #2, the field #3 occupies a bit B32 to a bit B(4+N)*8-1 of the NDPA frame, and * represents multiplication. As shown in FIG. 5, a smooth feedback bitmap (Smooth Feedback Bitmap) field represents the field #3.

The smooth feedback bitmap field is similar to the smooth feedback bitmap field of the STA info field in the NDPA frame in FIG. 5. Details are not described again.

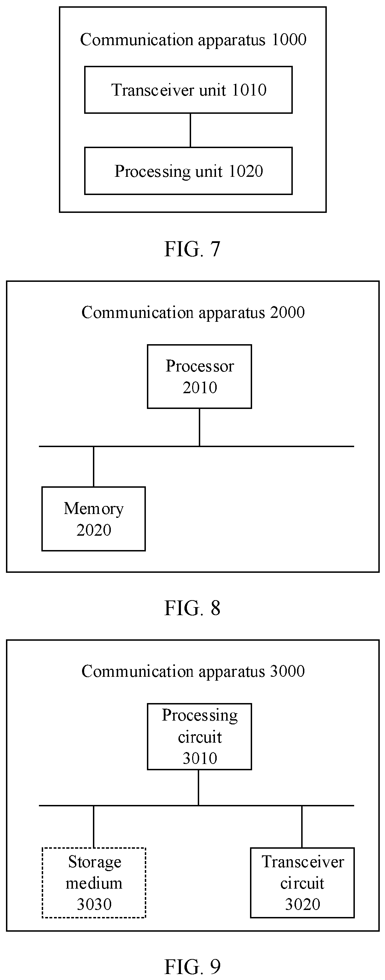

FIG. 7 is a diagram of a communication apparatus according to an embodiment of this application. As shown in FIG. 7, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement a procedure performed by the first device in the foregoing method embodiment. The processing unit 1020 is configured to perform a processing-related operation of the first device in the foregoing method embodiment, and the transceiver unit 1010 is configured to perform a receiving/sending-related operation of the first device in the foregoing method embodiment.

For example, the processing unit 1020 is configured to generate a first frame, where the first frame includes first indication information, the first indication information indicates whether a first channel meets a smoothness requirement, and the first channel includes a plurality of subchannels for communication between the apparatus and a second device; and the transceiver unit 1010 sends the first frame to the second device.

Optionally, the first indication information further indicates whether a subchannel in a first subchannel set meets the smoothness requirement, and the first subchannel set includes a part or all of subchannels in the plurality of subchannels.

Optionally, whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

Optionally, the transceiver unit 1010 is further configured to receive a second frame from the second device, where the second frame includes second indication information, and the second indication information indicates whether the first matrix or the second matrix meets the smoothness requirement.

Optionally, the transceiver unit 1010 is further configured to receive a second frame from the second device, where the second frame includes third indication information, the third indication information indicates whether a subchannel in a second subchannel set meets the smoothness requirement, the second subchannel set includes a part or all of subchannels in the plurality of subchannels, and the first subchannel set is different from the second subchannel set.

For example, the second frame is an extremely high throughput compressed beamforming frame or a channel quality indicator CQI frame.

For example, in some implementations of the third aspect, the first frame is a physical layer protocol data unit PPDU frame or a null data packet announcement NDPA frame.

Optionally, the first frame further includes a first field, and the first field indicates whether the first frame carries the first indication information.

Optionally, the second frame further includes a second field, and the second field indicates whether the second frame carries the second indication information.

In another possible design, the apparatus 1000 may implement a procedure performed by the second device in the foregoing method embodiment. The transceiver unit 1010 is configured to perform a receiving/sending-related operation of the second device in the foregoing method embodiment, and the processing unit 1020 is configured to perform a processing-related operation of the second device in the foregoing method embodiment.

For example, the transceiver unit 1010 is configured to receive a first frame from a first device, where the first frame includes first indication information, the first indication information indicates whether a first channel meets a smoothness requirement, and the first channel includes a plurality of subchannels for communication between the first device and the second device; and the processing unit 1020 is configured to determine, based on the first frame, whether the first channel meets the smoothness requirement.

Optionally, the first indication information further indicates whether a subchannel in a first subchannel set meets the smoothness requirement, and the first subchannel set includes a part or all of subchannels in the plurality of subchannels.

Optionally, whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

Optionally, the transceiver unit 1010 is further configured to send a second frame to the first device, where the second frame includes second indication information, and the second indication information indicates whether the first matrix or the second matrix meets the smoothness requirement.

Optionally, the transceiver unit 1010 is further configured to send a second frame to the first device, where the second frame includes third indication information, the third indication information indicates whether a subchannel in a second subchannel set meets the smoothness requirement, the second subchannel set includes a part or all of subchannels in the plurality of subchannels, and the first subchannel set is different from the second subchannel set.

For example, the second frame is an extremely high throughput compressed beamforming frame or a channel quality indicator CQI frame.

For example, the first frame is a physical layer protocol data unit PPDU frame or a null data packet announcement NDPA frame.

Optionally, the first frame further includes a first field, and the first field indicates whether the first frame carries the first indication information.

Optionally, the second frame further includes a second field, and the second field indicates whether the second frame carries the second indication information.

It should be understood that the apparatus 1000 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 1000 may be specifically the transmit end in the foregoing embodiment, and may be configured to perform a procedure corresponding to the transmit end in the foregoing method embodiment. Alternatively, the apparatus 1000 may be specifically the receive end in the foregoing embodiment, and may be configured to perform a procedure corresponding to the receive end in the foregoing method embodiment. To avoid repetition, details are not described herein again.

The apparatus 1000 has a function of implementing a corresponding step performed by the transmit end in the foregoing method, or the apparatus 1000 has a function of implementing a corresponding step performed by the receive end in the foregoing method. The function may be implemented by hardware, or may be implemented by hardware by executing corresponding software. The hardware or software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform sending and receiving operations and related processing operations in the method embodiment.

In addition, the transceiver unit may alternatively be a transceiver circuit (for example, may include a receiving circuit and a sending circuit), and the processing unit may be a processing circuit. In this embodiment of this application, the apparatus in FIG. 5 may be the receive end or the transmit end in the foregoing embodiment, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 6 shows a communication apparatus 2000 according to an embodiment of this application. The apparatus 2000 includes a processor 2010 and a memory 2020. The memory 2020 is configured to store instructions; and the processor 2010 may invoke the instructions stored in the memory 2020, to perform a procedure corresponding to the transmit end or the receive end in the foregoing method embodiment.

Specifically, in a possible implementation, the memory 2020 is configured to store instructions; and the processor 2010 may invoke the instructions stored in the memory 2020, to perform a procedure corresponding to the transmit end in the foregoing method embodiment.

Specifically, in another possible implementation, the memory 2020 is configured to store instructions; and the processor 2010 may invoke the instructions stored in the memory 2020, to perform a procedure corresponding to the receive end in the foregoing method embodiment.

It should be understood that the apparatus 2000 may be specifically the transmit end or the receive end in the foregoing embodiment, or may be a chip or a chip system used in the transmit end or the receive end. Specifically, the apparatus 2000 may be configured to perform the procedure corresponding to the transmit end or the receive end in the foregoing method embodiment.

Optionally, the memory 2020 may include a read-only memory and a random access memory, and provide instructions and data for the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the procedure corresponding to the transmit end or the receive end in the method embodiment.

In an implementation process, steps of the foregoing method may be completed by using a hardware integrated logic circuit in the processor or instructions in a form of software. The steps of the method disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the method in combination with hardware of the processor. To avoid repetition, details are not described herein again.

It should be noted that, the processor in embodiments of this application may be an integrated circuit chip, and has a signal processing capability. In an implementation process, the steps in the method embodiment may be completed by using a hardware integrated logic circuit in the processor or instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any memory of another appropriate type.

FIG. 7 shows a communication apparatus 3000 according to an embodiment of this application. The apparatus 3000 includes a processing circuit 3010 and a transceiver circuit 3020. The processing circuit 3010 and the transceiver circuit 3020 communicate with each other through an internal connection path. The processing circuit 3010 is configured to execute instructions to control the transceiver circuit 3020 to send a signal and/or receive a signal.

Optionally, the apparatus 3000 may further include a storage medium 3030. The storage medium 3030 communicates with the processing circuit 3010 and the transceiver circuit 3020 through internal connection paths. The storage medium 3030 is configured to store instructions, and the processing circuit 3010 may execute the instructions stored in the storage medium 3030.

In a possible implementation, the apparatus 3000 is configured to implement a procedure corresponding to the first device in the foregoing method embodiment.

In another possible implementation, the apparatus 3000 is configured to implement a procedure corresponding to the second device in the foregoing method embodiment.

According to the method provided in embodiments of this application, this application further provides a computer program product. The computer program product includes computer program code. When the computer program code is run on a computer, the computer is enabled to perform the method in the embodiment shown in FIG. 2.

According to the method provided in embodiments of this application, this application further provides a computer-readable medium. The computer-readable medium stores program code. When the program code is run on a computer, the computer is enabled to perform the method in the embodiment shown in FIG. 2.

According to the method provided in embodiments of this application, this application further provides a system, including the foregoing one or more stations and the foregoing one or more access points.

The term "at least one of..." in this specification represents all or any combination of listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based on only A, and B may alternatively be determined based on A and/or other information. Terms "include", "contain", "have", and other variants thereof all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, the numbers are used for distinguishing between different information and the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information indication method, comprising:
generating, by a first device, a first frame, wherein the first frame comprises first indication information, the first indication information indicates whether a first channel meets a smoothness requirement, and the first channel comprises a plurality of subchannels for communication between the first device and a second device; and
sending, by the first device, the first frame to the second device.

2. The method according to claim 1, wherein the first indication information further indicates whether a subchannel in a first subchannel set meets the smoothness requirement, and the first subchannel set comprises a part or all of subchannels in the plurality of subchannels.

3. The method according to claim 2, wherein whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

4. The method according to claim 3, wherein the method further comprises:
receiving, by the first device, a second frame from the second device, wherein the second frame comprises second indication information, and the second indication information indicates whether the first matrix or the second matrix meets the smoothness requirement.

5. The method according to claim 3, wherein the method further comprises:
receiving, by the first device, a second frame from the second device, wherein the second frame comprises third indication information, the third indication information indicates whether a subchannel in a second subchannel set meets the smoothness requirement, the second subchannel set comprises a part or all of subchannels in the plurality of subchannels, and the first subchannel set is different from the second subchannel set.

6. The method according to claim 4 or 5, wherein the second frame is an extremely high throughput compressed beamforming frame or a channel quality indicator CQI frame.

7. The method according to claim 5 or 6, wherein the second frame further comprises a second field, and the second field indicates whether the second frame carries the third indication information.

8. The method according to any one of claims 1 to 7, wherein the first frame is a physical layer protocol data unit PPDU frame or a null data packet announcement NDPA frame.

9. The method according to any one of claims 1 to 8, wherein the first frame further comprises a first field, and the first field indicates whether the first frame carries the first indication information.

10. An information indication method, comprising:
receiving, by a second device, a first frame from a first device, wherein the first frame comprises first indication information, the first indication information indicates whether a first channel meets a smoothness requirement, and the first channel comprises a plurality of subchannels for communication between the first device and the second device; and
generating, by the second device, a second frame based on the first frame.

11. The method according to claim 10, wherein the first indication information further indicates whether a subchannel in a first subchannel set meets the smoothness requirement, and the first subchannel set comprises a part or all of subchannels in the plurality of subchannels.

12. The method according to claim 11, wherein whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

13. The method according to claim 12, wherein the method further comprises:
sending, by the second device, the second frame to the first device, wherein the second frame comprises second indication information, and the second indication information indicates whether the first matrix or the second matrix meets the smoothness requirement.

14. The method according to claim 12, wherein the method further comprises:
sending, by the second device, the second frame to the first device, wherein the second frame comprises third indication information, the third indication information indicates whether a subchannel in a second subchannel set meets the smoothness requirement, the second subchannel set comprises a part or all of subchannels in the plurality of subchannels, and the first subchannel set is different from the second subchannel set.

15. The method according to claim 13 or 14, wherein the second frame is an extremely high throughput compressed beamforming frame or a channel quality indicator CQI frame.

16. The method according to claim 14 or 15, wherein the second frame further comprises a second field, and the second field indicates whether the second frame carries the third indication information.

17. The method according to any one of claims 10 to 16, wherein the first frame is a physical layer protocol data unit PPDU frame or a null data packet announcement NDPA frame.

18. The method according to any one of claims 10 to 17, wherein the first frame further comprises a first field, and the first field indicates whether the first frame carries the first indication information.

19. A communication apparatus, wherein the apparatus comprises a processing unit and a transceiver unit;
the processing unit is configured to generate a first frame, wherein the first frame comprises first indication information, the first indication information indicates whether a first channel meets a smoothness requirement, and the first channel comprises a plurality of subchannels for communication between the apparatus and a second device; and
the transceiver unit sends the first frame to the second device.

20. The apparatus according to claim 19, wherein the first indication information further indicates whether a subchannel in a first subchannel set meets the smoothness requirement, and the first subchannel set comprises a part or all of subchannels in the plurality of subchannels.

21. The apparatus according to claim 20, wherein whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

22. The apparatus according to claim 21, wherein the transceiver unit is further configured to:
receive a second frame from the second device, wherein the second frame comprises second indication information, and the second indication information indicates whether the first matrix or the second matrix meets the smoothness requirement.

23. The apparatus according to claim 21, wherein the transceiver unit is further configured to:
receive a second frame from the second device, wherein the second frame comprises third indication information, the third indication information indicates whether a subchannel in a second subchannel set meets the smoothness requirement, the second subchannel set comprises a part or all of subchannels in the plurality of subchannels, and the first subchannel set is different from the second subchannel set.

24. The apparatus according to claim 22 or 23, wherein the second frame is an extremely high throughput compressed beamforming frame or a channel quality indicator CQI frame.

25. The apparatus according to claim 23 or 24, wherein the second frame further comprises a second field, and the second field indicates whether the second frame carries the second indication information.

26. The apparatus according to any one of claims 19 to 25, wherein the first frame is a physical layer protocol data unit PPDU frame or a null data packet announcement NDPA frame.

27. The apparatus according to any one of claims 19 to 26, wherein the first frame further comprises a first field, and the first field indicates whether the first frame carries the first indication information.

28. A communication apparatus, wherein the apparatus comprises a processing unit and a transceiver unit;
the transceiver unit is configured to receive a first frame from a first device, wherein the first frame comprises first indication information, the first indication information indicates whether a first channel meets a smoothness requirement, and the first channel comprises a plurality of subchannels for communication between the first device and a second device; and
the processing unit is configured to generate a second frame based on the first frame.

29. The apparatus according to claim 28, wherein the first indication information further indicates whether a subchannel in a first subchannel set meets the smoothness requirement, and the first subchannel set comprises a part or all of subchannels in the plurality of subchannels.

30. The apparatus according to claim 29, wherein whether the part or all of the subchannels in the plurality of subchannels meet the smoothness requirement is whether a first matrix or a second matrix corresponding to the part or all of the subchannels meets the smoothness requirement, the first matrix is a beamforming feedback matrix, and the second matrix is a beamforming steering matrix, or the second matrix is obtained based on a channel matrix and a beamforming steering matrix.

31. The apparatus according to claim 30, wherein the transceiver unit is further configured to:
send the second frame to the first device, wherein the second frame comprises second indication information, and the second indication information indicates whether the first matrix or the second matrix meets the smoothness requirement.

32. The apparatus according to claim 30, wherein the transceiver unit is further configured to:
send, by the second device, the second frame to the first device, wherein the second frame comprises third indication information, the third indication information indicates whether a subchannel in a second subchannel set meets the smoothness requirement, the second subchannel set comprises a part or all of subchannels in the plurality of subchannels, and the first subchannel set is different from the second subchannel set.

33. The apparatus according to claim 31 or 32, wherein the second frame is an extremely high throughput compressed beamforming frame or a channel quality indicator CQI frame.

34. The apparatus according to claim 32 or 33, wherein the second frame further comprises a second field, and the second field indicates whether the second frame carries the third indication information.

35. The apparatus according to any one of claims 28 to 34, wherein the first frame is a physical layer protocol data unit PPDU frame or a null data packet announcement NDPA frame.

36. The apparatus according to any one of claims 28 to 35, wherein the first frame further comprises a first field, and the first field indicates whether the first frame carries the first indication information.

37. A communication apparatus, comprising:
a processor, wherein the processor is coupled to a memory; and
the processor is configured to execute a computer program or instructions stored in the memory, to enable the apparatus to perform the method according to any one of claims 1 to 9 or the method according to any one of claims 10 to 18.

38. A computer-readable storage medium, configured to store a computer program, wherein the computer program comprises instructions used to implement the method according to any one of claims 1 to 9, or comprises instructions used to implement the method according to any one of claims 10 to 18.

39. A chip, comprising a processor and an interface, and configured to: invoke a computer program stored in the memory from a memory and run the computer program, to perform the method according to any one of claims 1 to 9 or the method according to any one of claims 10 to 18.

40. A computer program product, comprising computer program code, wherein the computer program code is used to implement the method according to any one of claims 1 to 9 or the method according to any one of claims 10 to 18.
